# FASCICULE DE BREVET EUROPEEN

(11) **EP 3 440 504 B1**
(45) Date de publication et mention de la délivrance du brevet: **17.08.2022**
(21) Numéro de dépôt: 17715200.6
(22) Date de dépôt: 07.04.2017
(51) Int. Cl.: G02F 1/1333, G02B 27/01

(54) **DISPOSITIF DE GÉNÉRATION D'IMAGE, AFFICHEUR TÊTE HAUTE COMPRENANT UN TEL DISPOSITIF**
LICHTERZEUGUNGSVORRICHTUNG, HEAD-UP ANZEIGE MIT DER LICHTERZEUGUNGSVORRICHTUNG
LIGHT GENERATING DEVICE, HEAD-UP DISPLAY COMPRISING SUCH A DEVICE

(30) Priorité: 08.04.2016 FR 1653147
(43) Date de publication de la demande: 13.02.2019
(73) Titulaire: Valeo Comfort and Driving Assistance, 94046 Créteil Cedex (FR)
(72) Inventeur: BISSON, Jean-François, 94046 Créteil CEDEX (FR); LE-GUYADER, Delphine, 94046 Créteil CEDEX (FR); LEON, Renan, 94046 Créteil CEDEX (FR); VIVET, Laurent, 94046 Créteil CEDEX (FR)
(74) Mandataire: Delplanque, Arnaud
(86) Numéro de dépôt international: PCT/EP2017/058450
(87) Numéro de publication internationale: WO 2017/174804

(56) Documents cités:
- EP-A1- 1 724 620
- DE-A1-102014 206 586
- JP-A- 2005 202 332
- JP-A- 2005 313 733
- JP-A- 2005 338 160
- US-A1- 2005 195 369

## Description

### DOMAINE TECHNIQUE AUQUEL SE RAPPORTE L'INVENTION

La présente invention concerne la réduction de l'échauffement au sein des écrans, en particulier dans un dispositif de génération d'image pour afficheur tête haute.

Elle concerne plus particulièrement un dispositif de génération d'image, un afficheur tête haute comprenant un tel dispositif et un procédé de fabrication d'un dispositif de génération d'image.

### ARRIÈRE-PLAN TECHNOLOGIQUE

Le principe des afficheurs tête haute pour véhicule est de projeter des images, notamment utiles à la conduite, directement dans le champ de vision d'un conducteur.

Pour cela, les afficheurs tête haute comprennent en général un dispositif de génération d'images adapté à générer des images et un dispositif de projection des images générées adapté à transmettre ces images vers une lame semi-transparente placée dans le champ de vision du conducteur.

La plupart des dispositifs de génération d'images utilisés aujourd'hui comprennent une source de lumière rétroéclairant un écran adapté à générer les images. Cet écran absorbe une partie de la lumière qui le rétroéclaire, ce qui provoque son échauffement thermique.

Or, la température de l'écran est critique pour son bon fonctionnement, ce dernier risquant d'être endommagé, voire d'être rendu défectueux, par une température trop élevée. L'échauffement de l'écran peut par conséquent réduire sa durée de vie et conduire à son remplacement.

Il est donc nécessaire de trouver des solutions visant à refroidir l'écran, ou à éviter son échauffement. Les documents suivants constituent des documents d'art antérieur concernant le refroidissement d'écrans: JP 2005 338160 A, EP 1 724 620 A1 , US 2005/195369 A1, JP 2005 313733 A et DE 10 2014 206586.

### OBJET DE L'INVENTION

Dans ce contexte, la présente invention propose un dispositif de génération d'image selon la revendication 1, (en particulier pour afficheur tête haute, selon la revendication 6) et notamment comprenant une source de lumière produisant un faisceau lumineux et un écran traversé par le faisceau lumineux et conçu pour modifier le faisceau lumineux de manière à former une image, dans lequel l'écran comprend un élément transparent traversé par le faisceau lumineux et agencé pour évacuer la chaleur générée au niveau de l'écran, et ledit élément transparent est réalisé en céramique transparente frittée (c'est-à-dire obtenue par frittage).

L'utilisation d'un procédé de frittage permet la réalisation de l'élément transparent à moindre coût et est donc particulièrement adaptée à la production d'un dispositif de génération d'image en grandes séries.

La céramique susmentionnée a par exemple une conductivité thermique supérieure à 10 W/mK, de préférence même supérieure à 40 W/mK.

La céramique susmentionnée est par exemple un oxyde de magnésium. Le procédé de frittage permettant l'obtention d'une céramique transparente en oxyde de magnésium est en effet relativement simple. L'oxyde de magnésium a en outre une bonne conductivité thermique (comprise typiquement entre 45 W/mK et 50 W/mK) et son utilisation en tant qu'élément conducteur de la chaleur est donc particulièrement intéressante.

L'élément transparent peut en outre porter des éléments de polarisation du faisceau lumineux, tels que des lignes métalliques (formant une grille métallique) aptes à polariser la lumière traversant l'élément transparent. L'élément transparent peut alors être utilisé en tant que polariseur, comme proposé dans certains des exemples présentés plus loin.

L'écran comprend un capot métallique. L'élément est en contact thermique avec le capot métallique. On entend ici par contact thermique un contact direct ou indirect permettant la transmission de la chaleur. L'élément transparent pourra ainsi être en contact (physique) avec le capot métallique ou assemblé au capot métallique au moyen d'une colle.

La chaleur générée au sein de l'écran peut ainsi être transmise par l'élément transparent au capot métallique, où cette chaleur est plus facilement évacuée.

Un radiateur destiné à l'évacuation de la chaleur peut en outre être formé ou monté sur le capot métallique.

Selon l'invention, le capot métallique reçoit (à l'intérieur dudit capot métallique) une matrice de cristaux liquides, et une matrice d'éléments colorés.

Selon certains modes de réalisation, l'élément transparent peut être en contact avec au moins une face externe du capot métallique. On peut alors prévoir dans ce cas que l'élément transparent soit en contact thermique avec un autre élément de l'écran, par exemple un polariseur (ici le polariseur d'entrée), ce qui permet de transmettre au capot métallique une grande partie de la chaleur générée au niveau de cet autre élément de l'écran.

Selon d'autres modes de réalisation, l'élément transparent peut être reçu à l'intérieur du capot métallique. L'élément transparent est alors situé au cœur de l'écran et facilite ainsi l'évacuation de la chaleur générée au sein de l'écran.

L'élément transparent peut notamment être au contact d'une partie transversale du capot métallique entourant une fenêtre formée dans le capot métallique. On utilise ainsi avantageusement la partie transversale du capot métallique pour assurer à la fois la retenue (axiale) des parties constitutives de l'écran et le contact avec l'élément transparent en vue de l'évacuation de la chaleur.

L'élément transparent possède par exemple une transmittance supérieure à 50% (voire supérieure à 80%) dans le visible. L'élément transparent peut en outre avoir un traitement anti-reflet pour améliorer sa transmittance.

L'invention propose également un afficheur tête haute comprenant un dispositif de génération d'image ainsi que défini dans la revendication 6.

La présente description mentionne enfin un procédé de fabrication d'un dispositif de génération d'image comprenant une source de lumière produisant un faisceau lumineux et un écran traversé par le faisceau lumineux et conçu pour modifier le faisceau lumineux de manière à former une image, le procédé comprenant les étapes suivantes :
- frittage d'une poudre de manière à obtenir un élément en céramique transparente ;
- montage dudit élément au niveau de l'écran de sorte que cet élément soit traversé par le faisceau lumineux et évacue la chaleur générée au niveau de l'écran.

Les caractéristiques optionnelles présentées ci-dessus en termes de dispositif peuvent éventuellement s'appliquer à un tel procédé.

Divers agencements possibles de l'élément transparent à l'intérieur du capot métallique sont proposés dans la description qui suit.

### DESCRIPTION DÉTAILLÉE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement les éléments principaux d'un afficheur tête haute destiné à équiper un véhicule ;
- la figure 2 présente un premier exemple de réalisation d'un écran d'un afficheur tête haute tel que celui de la figure 1 ;
- la figure 3 présente un second exemple de réalisation d'un tel écran ;
- la figure 4 présente un troisième exemple de réalisation d'un tel écran ;
- la figure 5 présente un quatrième exemple de réalisation d'un tel écran ;
- la figure 6 présente un cinquième exemple de réalisation d'un tel écran ;
- la figure 7 présente un sixième exemple de réalisation d'un tel écran ; et
- la figure 8 présente un septième exemple de réalisation d'un tel écran.

Sur les figures, les proportions ne sont pas respectées afin de faire mieux ressortir la constitution des écrans présentés ci-dessous à titre d'exemples.

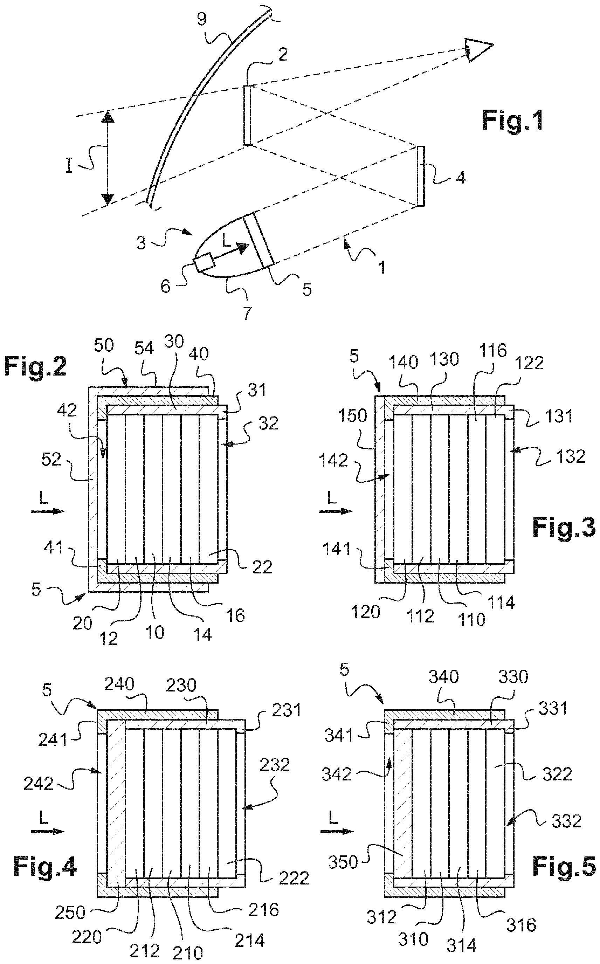

Sur la figure 1, on a schématiquement représenté les éléments principaux d'un afficheur 1 tête haute destiné à équiper un véhicule, par exemple un véhicule automobile.

Un tel afficheur 1 est adapté à créer une image virtuelle I dans le champ de vision d'un conducteur du véhicule, de sorte que le conducteur puisse voir cette image virtuelle I et les informations éventuelles qu'elle contient sans avoir à détourner le regard.

À cet effet, l'afficheur 1 comprend une lame semi-transparente 2 placée dans le champ de vision du conducteur, un dispositif de génération d'images 3 adapté à générer des images et un dispositif de projection 4 d'images adapté à renvoyer, en direction de ladite lame semi-transparente 2, les images générées par l'unité de génération d'images 3.

Plus précisément, la lame semi-transparente 2 est ici un combineur 2, c'est-à-dire une lame semi-transparente dédiée à l'afficheur tête haute 1.

Un tel combineur 2 est ici placé entre le pare-brise 9 du véhicule et les yeux du conducteur.

En variante, la lame semi-transparente pourrait être confondue avec le pare-brise du véhicule. Autrement dit, dans cette variante, c'est le pare-brise du véhicule qui a la fonction de lame-semi transparente pour l'afficheur tête haute.

Par ailleurs, ici, le dispositif de projection d'images comprend un miroir de repliement 4 agencé de manière à réfléchir les images générées par le dispositif de génération 3 d'images en direction de la lame semi-transparente 2. Ici, ledit miroir de repliement est un miroir plan.

En variante, le dispositif de projection d'images pourrait comprendre une pluralité de miroirs et/ou d'autres éléments optiques tels qu'une lentille par exemple.

Le dispositif de génération 3 d'images comprend quant à lui au moins une source de lumière 6, un écran 5 rétroéclairé par cette source de lumière 6, et un réflecteur 7. On a ainsi schématiquement représenté par la flèche L sur les figures la transmission de la lumière de la source de lumière 6 vers l'écran 5.

La source de lumière 6 est ici une diode électroluminescente (ou LED pour "*Light Emitting Diode*") et l'écran 5 est ici un écran à cristaux liquides (ou LCD pour "*Liquid Crystal Display*"), par exemple à transistors en couche mince (ou TFT pour "*Thin-Film Transistor*"). Des exemples de réalisation d'un tel écran sont décrits dans la suite.

La figure 2 présente un premier exemple de réalisation de l'écran 5.

Dans ce premier exemple, l'écran 5 comprend, dans cet ordre dans le sens du trajet de la lumière L (c'est-à-dire de la partie située du côté de la source de lumière 6 au côté situé vers le dispositif de projection 4), les éléments (ou lames) en forme de plaque qui suivent (chaque élément étant en contact avec le ou les éléments voisin(s)) :
- un polariseur d'entrée 20 ;
- une première vitre 12 ;
- une matrice de cristaux liquides 10 ;
- une seconde vitre 14 ;
- une matrice d'éléments colorés 16 ;
- un polariseur de sortie 22.

Le polariseur d'entrée 20 et le polariseur de sortie 22 sont ici des filtres polariseurs par absorption (d'où un échauffement important au niveau de ces polariseurs 20, 22). Le polariseur d'entrée 20 et le polariseur de sortie 22 ont respectivement un premier axe et un second axe perpendiculaires entre eux (dans le cadre de la technologie dite "*normalement éteint*", ou NB pour "*normally black*"). (On rappelle que l'axe d'un polariseur est la direction de polarisation rectiligne du faisceau lumineux après passage à travers le polariseur.)

Ainsi, si aucun élément de la matrice de cristaux liquides 10 n'est actif, le faisceau lumineux entre le polariseur d'entrée 20 et le polariseur de sortie 22 sera polarisé selon le premier axe (axe du polariseur d'entrée 20) et aucune lumière ne sera donc émise en sortie du polariseur de sortie 22.

Par activation adaptée des éléments de la matrice de cristaux liquides 10 (au moyen d'un module de commande non représentée), la polarisation de certaines parties du faisceau lumineux est modifiée au niveau de la matrice de cristaux liquides 10 de sorte que de la lumière est émise en sortie du polariseur de sortie 22 au niveau de régions correspondants auxdites parties du faisceau lumineux.

Pour chaque pixel de l'écran 5, la matrice d'éléments colorés 16 comprend une pluralité d'éléments colorés (ici un élément rouge, un élément vert et un élément bleu) à travers chacun desquels il est possible de faire passer une intensité réglable de lumière par activation adaptée de l'élément correspondant de la matrice à cristaux liquides 10, comme indiqué ci-dessus.

On obtient ainsi une couleur souhaitée pour chaque pixel, par combinaison additive des lumières traversant les différents éléments colorés de ce pixel.

Les éléments en forme de plaque précités 10, 12, 14, 16, 20, 22 sont montés dans un premier capot 30 (parfois dénommé "*bezel*"), réalisé ici en matière plastique. Le premier capot 30 s'étend pour l'essentiel autour des tranches des éléments en forme de plaque précités 10, 12, 14, 16, 20, 22 de manière à retenir ces éléments en forme de plaque plaqués les uns contre les autres.

Le premier capot 30 comprend en outre une partie transversale 31 qui s'étend au contact de la face de sortie du polariseur de sortie 22 de manière à retenir axialement les éléments en forme de plaque précités 10, 12, 14, 16, 20, 22. Une fenêtre 32 est toutefois formée dans cette partie transversale 31 du premier capot 30 pour permettre la sortie du faisceau lumineux généré par l'écran 5.

Le premier capot 30 est lui-même reçu dans un second capot 40 (également couvert par l'appellation "*bezel*" susmentionnée). Le second capot 40 est un capot métallique.

Le second capot 40 s'étend autour du premier capot 30 sur la plus grande partie de la longueur du premier capot 30 (selon la direction du trajet de la lumière). Le second capot 40 comprend en outre une partie transversale 41 qui s'étend au droit (et au contact) de l'extrémité circonférentielle du premier capot 30 et d'une partie de la face d'entrée du polariseur d'entrée 20 de manière à retenir axialement les éléments en forme de plaque précités 10, 12, 14, 16, 20, 22. Une fenêtre 42 est toutefois formée dans la partie transversale 41 du second capot 40 pour permettre l'entrée de la lumière générée par la source de lumière 6.

L'écran 5 comprend en outre un élément transparent 50 réalisé en magnésie (ou oxyde de magnésium, de formule MgO) frittée et destiné à évacuer la chaleur, en particulier celle générée au niveau du polariseur d'entrée 20.

Pour ce faire, l'élément transparent 50 est ici disposé au contact du second capot 40. Dans le présent mode de réalisation, l'élément transparent 50 est agencé à l'extérieur du second capot 40, en entourant le second capot 40 comme expliqué à présent.

L'élément transparent 40 comprend une base 52 qui s'étend transversalement au trajet de la lumière (et donc dans le cas présent parallèlement à la partie transversale 41 du second capot 40), au droit de la totalité de la surface d'entrée du polariseur d'entrée 20.

L'élément transparent 40 comprend ici en outre des parois latérales 54 qui s'étendent à partir de régions périphériques de la base 52 et au contact du second capot 40 (précisément des régions du second capot 40 entourant les éléments en forme de plaque 10, 12, 14, 16, 20, 22).

L'élément transparent 50 est éventuellement monté collé sur le second capot 40.

La chaleur générée par l'écran 5 (en particulier au niveau du polariseur d'entrée 20) est transmise au second capot 40 au niveau de sa partie transversale 41 (en contact avec le polariseur d'entrée 20), puis à l'élément transparent 50.

On peut prévoir en outre un radiateur (non représenté) monté au contact du second capot 40 et/ou de l'élément transparent 50.

Afin d'améliorer encore l'évacuation de chaleur, on peut prévoir de remplir de colle transparente la fenêtre 42 formée dans le second capot 40. En effet, la chaleur pourra alors s'évacuer du polariseur d'entrée 20 à l'élément transparent 50 via la colle transparente.

En variante, on peut prévoir que la base 52 de l'élément transparent 50 présente une excroissance qui s'étende dans la fenêtre 42 du second capot 40 jusqu'au contact du polariseur d'entrée 20 de sorte que la chaleur pourra s'évacuer directement du polariseur d'entrée 20 à l'élément transparent 50.

L'oxyde de magnésium a une bonne conductivité thermique, de l'ordre de 47 W/mK, ce qui permet d'évacuer efficacement la chaleur dans les différentes dispositions envisagées ci-dessus.

On peut prévoir en outre que la base 52 de l'élément transparent 50 porte, par exemple sur sa face tournée vers la source de lumière, un ensemble de lignes métalliques formant une grille métallique de sorte que l'élément transparent 50 (muni de cette grille métallique) forme un polariseur réfléchissant (avec un axe de polarisation identique à celui du polariseur d'entrée 20).

Les lignes métalliques sont par exemple produites par dépôt sous vide sur l'élément transparent 50 (par condensation de vapeur métallique en un film uniforme à la surface de l'élément transparent 50), puis au moyen d'un procédé de lithographie (suppression des parties métalliques non protégées par une résine afin de forme les lignes métalliques).

L'élément transparent 50 assure ainsi en outre une fonction (optique) de polarisation.

Ainsi, les rayons lumineux dont la polarisation ne correspond pas à celle de l'élément transparent 50 (ni par conséquent à celle du polariseur d'entrée 20) sont réfléchis vers l'intérieur du dispositif de formation d'image 3, en général vers le réflecteur 7, où ils peuvent être réfléchis à nouveau et éventuellement renvoyés vers l'élément transparent 50 avec une polarisation correspondant cette fois à celle de l'élément transparent 50.

On décrit ci-dessous d'autres exemples de réalisation envisageables pour l'écran 5. Par souci de concision, on ne décrira pas à nouveau dans la description qui suit les aspects de fonctionnement qui ont déjà été présentés ci-dessus en référence à la figure 2.

La figure 3 présente un second exemple de réalisation de l'écran 5.

Dans cet exemple, l'écran 5 comprend, dans cet ordre dans le sens du trajet de la lumière L (c'est-à-dire de la partie située du côté de la source de lumière 6 au côté situé vers le dispositif de projection 4), les éléments (ou lames) en forme de plaque qui suivent (chaque élément étant en contact avec le ou les éléments voisin(s)) :
- un polariseur d'entrée 120 ;
- une première vitre 112 ;
- une matrice de cristaux liquides 110 ;
- une seconde vitre 114 ;
- une matrice d'éléments colorés 116 ;
- un polariseur de sortie 122.

Les éléments en forme de plaque précités 110, 112, 114, 116, 120, 122 sont montés dans un premier capot 130 (parfois dénommé "*bezel*"), réalisé ici en matière plastique. Le premier capot 130 s'étend pour l'essentiel autour des tranches des éléments en forme de plaque précités 110, 112, 114, 116, 120, 122 de manière à retenir ces éléments en forme de plaque plaqués les uns contre les autres.

Le premier capot 130 comprend en outre une partie transversale 131 qui s'étend au contact de la face de sortie du polariseur de sortie 122 de manière à retenir axialement les éléments en forme de plaque précités 110, 112, 114, 116, 120, 122. Une fenêtre 132 est toutefois formée dans cette partie transversale 131 du premier capot 130 pour permettre la sortie du faisceau lumineux généré par l'écran 5.

Le premier capot 130 est lui-même reçu dans un second capot 140 (également couvert par l'appellation "*bezel*" susmentionnée). Le second capot 140 est un capot métallique.

Le second capot 140 s'étend autour du premier capot 130 sur la plus grande partie de la longueur du premier capot 130 (selon la direction du trajet de la lumière). Le second capot 140 comprend en outre une partie transversale 141 qui s'étend au droit (et au contact) de l'extrémité circonférentielle du premier capot 130 et d'une partie de la face d'entrée du polariseur d'entrée 120 de manière à retenir axialement les éléments en forme de plaque précités 110, 112, 114, 116, 120, 122. Une fenêtre 142 est toutefois formée dans la partie transversale 141 du second capot 140 pour permettre l'entrée de la lumière générée par la source de lumière 6.

L'écran 5 comprend en outre un élément transparent 150 réalisé, sous forme de plaque, en magnésie (ou oxyde de magnésium, de formule MgO) frittée et destiné à évacuer la chaleur, en particulier celle générée au niveau du polariseur d'entrée 120.

Pour ce faire, l'élément transparent 150 est disposé au contact du second capot 140, ici contre la partie transversale 142 du second capot 140. L'élément transparent 150 est par exemple collé à la partie transversale 142 du second capot 140.

Afin d'améliorer encore l'évacuation de chaleur, on peut prévoir de remplir de colle transparente la fenêtre 142 formée dans le second capot 140. En variante, on peut prévoir que l'élément transparent 150 présente une excroissance qui s'étende dans la fenêtre 142 du second capot 140 jusqu'au contact du polariseur d'entrée 120 de sorte que la chaleur pourra s'évacuer directement du polariseur d'entrée 120 à l'élément transparent 150.

L'élément transparent 150 peut en outre porter, par exemple sur sa face tournée vers la source de lumière 6, un ensemble de lignes métalliques formant une grille métallique de sorte que l'élément transparent 150 (muni de cette grille métallique) forme un polariseur réfléchissant (avec un axe de polarisation identique à celui du polariseur d'entrée 120).

La figure 4 présente un troisième exemple de réalisation de l'écran 5.

Dans cet exemple, l'écran 5 comprend, dans cet ordre dans le sens du trajet de la lumière L (c'est-à-dire de la partie située du côté de la source de lumière 6 au côté situé vers le dispositif de projection 4), les éléments (ou lames) en forme de plaque qui suivent (chaque élément étant en contact avec le ou les éléments voisin(s)) :
- un élément transparent 250 ;
- un polariseur d'entrée 220 ;
- une première vitre 212 ;
- une matrice de cristaux liquides 210 ;
- une seconde vitre 214 ;
- une matrice d'éléments colorés 216 ;
- un polariseur de sortie 222.

L'élément transparent 250 est réalisé en magnésie (ou oxyde de magnésium, de formule MgO) frittée.

L'élément transparent 250 est ainsi disposé au contact du polariseur d'entrée 220 et peut ainsi évacuer la chaleur générée au sein de l'écran 5, en particulier la chaleur générée au niveau du polariseur d'entrée 220.

Les éléments en forme de plaque précités 210, 212, 214, 216, 220, 222 (sauf l'élément transparent 250) sont montés dans un premier capot 230 (parfois dénommé "*bezel*"), réalisé ici en matière plastique. Le premier capot 230 s'étend pour l'essentiel autour des tranches des éléments en forme de plaque précités 210, 212, 214, 216, 220, 222 (sauf ici autour de l'élément transparent 250) de manière à retenir ces éléments en forme de plaque plaqués les uns contre les autres.

Le premier capot 230 comprend en outre une partie transversale 231 qui s'étend au contact de la face de sortie du polariseur de sortie 222 de manière à retenir axialement les éléments en forme de plaque précités 210, 212, 214, 216, 220, 222, 250. Une fenêtre 232 est toutefois formée dans cette partie transversale 231 du premier capot 230 pour permettre la sortie du faisceau lumineux généré par l'écran 5.

Le premier capot 230 et l'élément transparent 250 sont reçus dans un second capot 240. Le second capot 240 est un capot métallique.

Le second capot 240 s'étend autour de l'élément transparent 250 et du premier capot 130, sur la plus grande partie de la longueur du premier capot 130 (selon la direction du trajet de la lumière). Le second capot 240 comprend en outre une partie transversale 241 qui s'étend au droit (et au contact) de la partie périphérique de l'élément transparent 250 de manière à retenir axialement les éléments en forme de plaque précités 210, 212, 214, 216, 220, 222, 250. Une fenêtre 242 est toutefois formée dans la partie transversale 241 du second capot 240 (au droit de la partie centrale de l'élément transparent 250) pour permettre l'entrée, dans l'écran 5 et à travers l'élément transparent 250, de la lumière générée par la source de lumière 6.

Le présent mode de réalisation permet lui aussi une évacuation particulièrement efficace de la chaleur générée par l'écran 5. Le polariseur d'entrée 220 est en effet en contact, au niveau de toute sa face d'entrée, avec l'élément transparent 250, lequel est en contact avec le second capot 240 vers lequel s'évacue facilement la chaleur (grâce à bonne conductivité thermique de l'élément transparent 250 en oxyde de magnésium et du second capot 240 métallique). Un radiateur (non représenté) peut en outre être formé ou monté sur le second capot 240.

Par ailleurs, on peut prévoir éventuellement de relier l'élément transparent 250 et le polariseur d'entrée 220 au moyen d'une colle transparente, ce qui ne remet pas en cause le fonctionnement qui vient d'être décrit.

L'élément transparent 250 peut en outre porter, par exemple sur sa face tournée vers la source de lumière 6, un ensemble de lignes métalliques formant une grille métallique de sorte que l'élément transparent 250 (muni de cette grille métallique) forme un polariseur réfléchissant (avec un axe de polarisation identique à celui du polariseur d'entrée 220).

La figure 5 présente un quatrième exemple de réalisation de l'écran 5.

Dans cet exemple, l'écran 5 comprend, dans cet ordre dans le sens du trajet de la lumière L (c'est-à-dire de la partie située du côté de la source de lumière 6 au côté situé vers le dispositif de projection 4), les éléments (ou lames) en forme de plaque qui suivent (chaque élément étant en contact avec le ou les éléments voisin(s)) :
- un élément transparent 350 formant polariseur d'entrée ;
- une première vitre 312 ;
- une matrice de cristaux liquides 310 ;
- une seconde vitre 314 ;
- une matrice d'éléments colorés 316 ;
- un polariseur de sortie 322.

L'élément transparent 350 est réalisé en magnésie (ou oxyde de magnésium, de formule MgO) frittée.

Afin d'assurer la fonction de polariseur d'entrée (voir notamment la description présentée ci-dessus en référence à la figure 1 sur le fonctionnement de l'écran 5), l'élément transparent 350 porte, par exemple sur sa face tournée vers la source de lumière 6, un ensemble de lignes métalliques formant une grille métallique.

L'élément transparent 350 est ainsi disposé au contact des autres éléments en forme de plaque et peut évacuer la chaleur générée au sein de l'écran 5.

Les éléments en forme de plaque précités 310, 312, 314, 316, 322, 350 sont montés dans un premier capot 330 (parfois dénommé "*bezel*"), réalisé ici en matière plastique. Le premier capot 330 s'étend pour l'essentiel autour des tranches des éléments en forme de plaque précités 310, 312, 314, 316, 322, 350 de manière à retenir ces éléments en forme de plaque plaqués les uns contre les autres.

Le premier capot 330 comprend en outre une partie transversale 331 qui s'étend au contact de la face de sortie du polariseur de sortie 322 de manière à retenir axialement les éléments en forme de plaque précités 310, 312, 314, 316, 322, 350. Une fenêtre 332 est toutefois formée dans cette partie transversale 331 du premier capot 330 pour permettre la sortie du faisceau lumineux généré par l'écran 5.

Le premier capot 330 est quant à lui reçu dans un second capot 340. Le second capot 340 est un capot métallique.

Le second capot 340 s'étend autour du premier capot 330, sur la plus grande partie de la longueur du premier capot 330 (selon la direction du trajet de la lumière). Le second capot 340 comprend en outre une partie transversale 341 qui s'étend au droit (et au contact) de la partie périphérique de l'élément transparent 350 de manière à retenir axialement les éléments en forme de plaque précités 310, 312, 314, 316, 322, 350. Une fenêtre 342 est toutefois formée dans la partie transversale 341 du second capot 340 (au droit de la partie centrale de l'élément transparent 350) pour permettre l'entrée, dans l'écran 5 et à travers l'élément transparent 350, de la lumière générée par la source de lumière 6.

Dans le présent mode de réalisation, la chaleur générée au sein de l'écran 5 est évacuée via l'élément transparent 350 vers le second capot 340 (grâce notamment au contact entre l'élément transparent 350 et le second capot 340 au niveau de la partie périphérique de l'élément transparent 350, ainsi qu'à la bonne conductivité thermique de l'élément transparent 350 en oxyde de magnésium). Un radiateur (non représenté) peut en outre être formé ou monté sur le second capot 340.

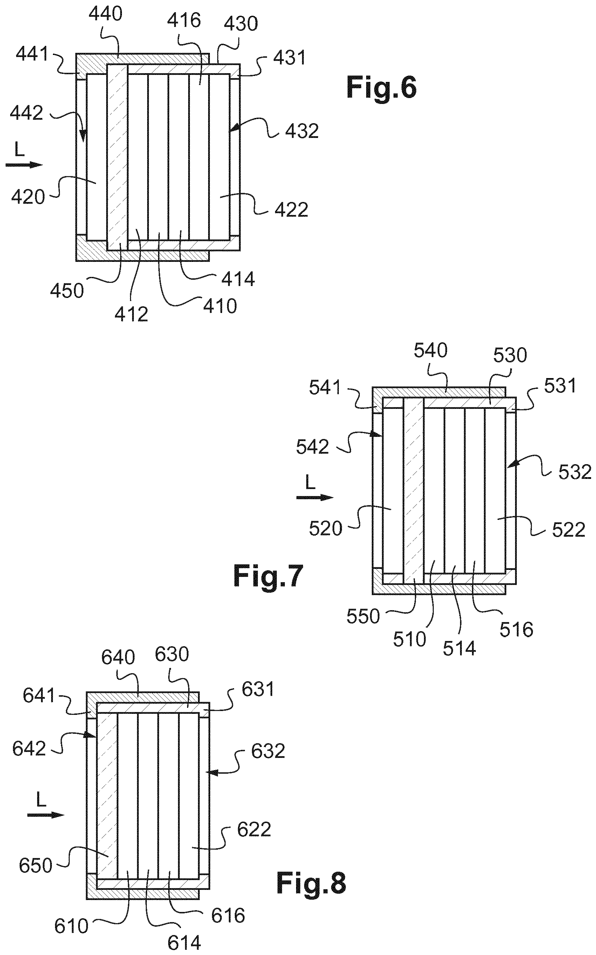

La figure 6 présente un cinquième exemple de réalisation de l'écran 5.

Dans cet exemple, l'écran 5 comprend, dans cet ordre dans le sens du trajet de la lumière L (c'est-à-dire de la partie située du côté de la source de lumière 6 au côté situé vers le dispositif de projection 4), les éléments (ou lames) en forme de plaque qui suivent (chaque élément étant en contact avec le ou les éléments voisin(s)) :
- un polariseur d'entrée 420 ;
- un élément transparent 450 ;
- une première vitre 412 ;
- une matrice de cristaux liquides 410 ;
- une seconde vitre 414 ;
- une matrice d'éléments colorés 416 ;
- un polariseur de sortie 422.

L'élément transparent 450 est réalisé en magnésie (ou oxyde de magnésium, de formule MgO) frittée.

L'élément transparent 450 est ainsi disposé au contact des autres éléments en forme de plaque, ici entre le polariseur d'entrée 420 et la première vitre 412, et peut évacuer la chaleur générée au sein de l'écran 5.

Les éléments en forme de plaque précités 410, 412, 414, 416, 420, 422, 450 sont montés dans un premier capot 430 (parfois dénommé "*bezel*"), réalisé ici en matière plastique. Le premier capot 430 s'étend pour l'essentiel autour des tranches d'une partie des éléments en forme de plaque précités 410, 412, 414, 416, 422 de manière à retenir ces éléments en forme de plaque plaqués les uns contre les autres.

Le premier capot 430 comprend en outre une partie transversale 431 qui s'étend au contact de la face de sortie du polariseur de sortie 422 de manière à retenir axialement les éléments en forme de plaque précités 410, 412, 414, 416, 420, 422, 450. Une fenêtre 432 est toutefois formée dans cette partie transversale 431 du premier capot 430 pour permettre la sortie du faisceau lumineux généré par l'écran 5.

Le premier capot 430 est quant à lui reçu dans un second capot 440. Le second capot 440 est un capot métallique.

Le second capot 440 s'étend autour du premier capot 430, sur la plus grande partie de la longueur du premier capot 430 (selon la direction du trajet de la lumière). Le second capot 440 comprend en outre une partie transversale 441 qui s'étend au droit (et au contact) de la partie périphérique du polariseur d'entrée 420 de manière à retenir axialement les éléments en forme de plaque précités 410, 412, 414, 416, 420, 422, 450. Une fenêtre 442 est toutefois formée dans la partie transversale 441 du second capot 440 (au droit de la partie centrale du polariseur d'entrée 420) pour permettre l'entrée, dans l'écran 5 et à travers le polariseur d'entrée 420, de la lumière générée par la source de lumière 6.

L'élément transparent 450 a des dimensions légèrement supérieures à celles des autres éléments en forme de plaque 410, 412, 414, 416, 422 de sorte que l'élément transparent 450 s'étend (au niveau de sa tranche) au contact du second capot 440.

On pourrait prévoir alors que le polariseur d'entrée 420 ait des dimensions identiques à celles de l'élément transparent 450 de manière à être immobilisé entre le second capot 440 et l'élément transparent 450. En variante, on peut prévoir que le premier capot 430 s'étende également au niveau du polariseur d'entrée 420, comme dans le cas du sixième exemple représenté en figure 7. Dans l'exemple de réalisation décrit ici, comme représenté sur la figure 6, le second capot 440 est conformé pour s'adapter, au niveau du polariseur d'entrée 420, aux dimensions extérieures du polariseur d'entrée 420.

Dans le présent mode de réalisation, la chaleur générée au sein de l'écran 5 est évacuée via l'élément transparent 450 vers le second capot 440 (grâce notamment au contact entre l'élément transparent 450 et le second capot 440 au niveau de la tranche de l'élément transparent 450, ainsi qu'à la bonne conductivité thermique de l'élément transparent 450 en oxyde de magnésium). Un radiateur (non représenté) peut en outre être formé ou monté sur le second capot 440.

La figure 7 présente un sixième exemple de réalisation de l'écran 5.

Dans cet exemple, l'écran 5 comprend, dans cet ordre dans le sens du trajet de la lumière L (c'est-à-dire de la partie située du côté de la source de lumière 6 au côté situé vers le dispositif de projection 4), les éléments (ou lames) en forme de plaque qui suivent (chaque élément étant en contact avec le ou les éléments voisin(s)) :
- un polariseur d'entrée 520 ;
- un élément transparent 550 formant une première vitre pour retenue des cristaux liquides ;
- une matrice de cristaux liquides 510 ;
- une seconde vitre 514 ;
- une matrice d'éléments colorés 516 ;
- un polariseur de sortie 522.

L'élément transparent 550 est réalisé en magnésie (ou oxyde de magnésium, de formule MgO) frittée.

L'élément transparent 550 est ainsi disposé au cœur de l'écran 5, ici entre le polariseur d'entrée 520 et la matrice de cristaux liquides 510, et peut évacuer la chaleur générée au sein de l'écran 5.

Les éléments en forme de plaque précités 510, 514, 516, 520, 522, 550 sont montés dans un premier capot 530 (parfois dénommé "*bezel*"), réalisé ici en matière plastique. Le premier capot 530 s'étend pour l'essentiel autour des tranches des éléments en forme de plaque précités 510, 514, 516, 520, 522 (sauf en ce qui concerne l'élément transparent 550) de manière à retenir ces éléments en forme de plaque plaqués les uns contre les autres.

Le premier capot 530 comprend en outre une partie transversale 531 qui s'étend au contact de la face de sortie du polariseur de sortie 522 de manière à retenir axialement les éléments en forme de plaque précités 510, 514, 516, 520, 522, 550. Une fenêtre 532 est toutefois formée dans cette partie transversale 531 du premier capot 530 pour permettre la sortie du faisceau lumineux généré par l'écran 5.

Le premier capot 530 est quant à lui reçu dans un second capot 540. Le second capot 540 est un capot métallique.

Le second capot 540 s'étend autour du premier capot 530, sur la plus grande partie de la longueur du premier capot 530 (selon la direction du trajet de la lumière). Le second capot 540 comprend en outre une partie transversale 541 qui s'étend au droit (et au contact) de la partie périphérique du polariseur d'entrée 520 de manière à retenir axialement les éléments en forme de plaque précités 510, 514, 516, 520, 522, 550. Une fenêtre 542 est toutefois formée dans la partie transversale 541 du second capot 540 (au droit de la partie centrale du polariseur d'entrée 520) pour permettre l'entrée, dans l'écran 5 et à travers le polariseur d'entrée 520, de la lumière générée par la source de lumière 6.

L'élément transparent 550 a, sur une partie au moins de sa périphérie, des dimensions légèrement supérieures à celles des autres éléments en forme de plaque 510, 514, 516, 520, 522 de sorte que l'élément transparent 550 s'étend, à travers des ouvertures formées dans le premier capot 530, au contact du second capot 540 (au niveau d'une partie au moins de la tranche de l'élément transparent 550).

Dans le présent mode de réalisation, la chaleur générée au sein de l'écran 5 est évacuée via l'élément transparent 550 vers le second capot 540 (grâce notamment au contact entre l'élément transparent 550 et le second capot 540 sur une partie au moins de la tranche de l'élément transparent 550, ainsi qu'à la bonne conductivité thermique de l'élément transparent 550 en oxyde de magnésium). Un radiateur (non représenté) peut en outre être formé ou monté sur le second capot 540.

La figure 8 présente un septième exemple de réalisation de l'écran 5.

Dans cet exemple, l'écran 5 comprend, dans cet ordre dans le sens du trajet de la lumière L (c'est-à-dire de la partie située du côté de la source de lumière 6 au côté situé vers le dispositif de projection 4), les éléments (ou lames) en forme de plaque qui suivent (chaque élément étant en contact avec le ou les éléments voisin(s)) :
- un élément transparent 650 formant polariseur d'entrée et vitre de retenue des cristaux liquides ;
- une matrice de cristaux liquides 610 ;
- une vitre 614 ;
- une matrice d'éléments colorés 616 ;
- un polariseur de sortie 622.

L'élément transparent 650 est réalisé en magnésie (ou oxyde de magnésium, de formule MgO) frittée.

Afin d'assurer la fonction de polariseur d'entrée (voir notamment la description présentée ci-dessus en référence à la figure 1 sur le fonctionnement de l'écran 5), l'élément transparent 650 porte, par exemple sur sa face tournée vers la source de lumière 6, un ensemble de lignes métalliques formant une grille métallique.

L'élément transparent 650 est ainsi disposé au contact des autres éléments en forme de plaque et peut évacuer la chaleur générée au sein de l'écran 5.

Les éléments en forme de plaque précités 610, 614, 616, 622, 650 sont montés dans un premier capot 630 (parfois dénommé "*bezel*"), réalisé ici en matière plastique. Le premier capot 630 s'étend pour l'essentiel autour des tranches des éléments en forme de plaque précités 610, 614, 616, 622, 650 de manière à retenir ces éléments en forme de plaque plaqués les uns contre les autres.

Le premier capot 630 comprend en outre une partie transversale 631 qui s'étend au contact de la face de sortie du polariseur de sortie 622 de manière à retenir axialement les éléments en forme de plaque précités 610, 614, 616, 622, 650. Une fenêtre 632 est toutefois formée dans cette partie transversale 631 du premier capot 630 pour permettre la sortie du faisceau lumineux généré par l'écran 5.

Le premier capot 630 est quant à lui reçu dans un second capot 640. Le second capot 640 est un capot métallique.

Le second capot 640 s'étend autour du premier capot 630, sur la plus grande partie de la longueur du premier capot 630 (selon la direction du trajet de la lumière). Le second capot 640 comprend en outre une partie transversale 641 qui s'étend au droit (et au contact) de la partie périphérique de l'élément transparent 650 de manière à retenir axialement les éléments en forme de plaque précités 610, 614, 616, 622, 650. Une fenêtre 642 est toutefois formée dans la partie transversale 641 du second capot 640 (au droit de la partie centrale de l'élément transparent 650) pour permettre l'entrée, dans l'écran 5 et à travers le polariseur d'entrée 620, de la lumière générée par la source de lumière 6.

Dans le présent mode de réalisation, la chaleur générée au sein de l'écran 5 est évacuée via l'élément transparent 650 vers le second capot 640 (grâce notamment au contact entre l'élément transparent 650 et le second capot 640 au niveau de la partie périphérique de l'élément transparent 650, ainsi qu'à la bonne conductivité thermique de l'élément transparent 650 en oxyde de magnésium). Un radiateur (non représenté) peut en outre être formé ou monté sur le second capot 640.

Comme indiqué ci-dessus, pour l'ensemble des modes de réalisation qui viennent d'être décrits, l'élément transparent 50, 150, 250, 350, 450, 550, 650 est obtenu au moyen d'un procédé de frittage.

Un tel procédé de frittage est par exemple du type "*pressage isostatique à chaud*" (ou HIP pour "*Hot Isostatic Pressing*") ou du type "*frittage flash*" (ou SPS pour "*Spark Plasma Sintering*")*.*

On propose d'ici d'appliquer un tel procédé de frittage à une poudre d'oxyde de magnésium, ce qui permet d'obtenir facilement une céramique transparente, apte à former l'élément transparent 50, 150, 250, 350, 450, 550, 650 précité. On se référera par exemple à l'article "*MgO* - *Transparent Ceramics with High Thermal Conductivity*", Fraunhofer IKTS Annual Report 2012/13 pour plus de détail sur un tel procédé d'obtention de l'élément transparent 50, 150, 250, 350, 450, 550, 650.

La transmittance d'un tel élément transparent est supérieure à 85% (de l'ordre de 86,5%).

On pourra toutefois en dehors du cadre de l'invention telle que revendiquée utiliser en variante d'autres céramiques transparentes, là encore sous une forme frittée, c'est-à-dire obtenue par frittage.

On pourra par exemple utiliser une céramique transparente à base d'oxyde simple (Al₂O₃, ZrO₂, Y₂O₃, Sc₂O₃ ou Lu₂O₃) ou à base d'oxyde complexe (Y₃Al₅O₁₂, MgAl₂O₄ ou ZNAl₂O₄, voire Lu₂TiO₃, Lu₂Zr₂O₇, Lu₃NbO₇, LaGdZr₂O₇, La_{9,33}Si₆O₂₆, Sr₂Y₈(SiO₄)₆O₂, Sr₃Al₂O₆, BaAl₄O₇), ou encore à base non-oxyde (AION ou AIN). Dans chacun des exemples de réalisation présentés ci-dessus en référence aux figures 2 à 8, on pourra utiliser en dehors du cadre de l'invention telle que revendiquée un élément transparent formé d'une céramique transparente à base de l'un quelconque des matériaux qui viennent d'être listés.

On remarque par ailleurs que la bonne conductivité thermique de l'oxyde de magnésium (typiquement comprise entre 45 W/mK et 60 W/mK) permet d'obtenir une bonne évacuation de la chaleur via l'élément transparent 50, 150, 250, 350, 450, 550, 650, même si celui-ci a une épaisseur limitée, par exemple comprise entre 0,5 mm et 3 mm. Dans les exemples décrits ici, on propose d'utiliser un élément transparent ayant une épaisseur comprise entre 0,5 mm et 1,5 mm, précisément entre 0,8 mm et 1,2 mm (par exemple une épaisseur de 1 mm).

De manière générale, on propose d'utiliser en dehors du cadre de l'invention telle que revendiquée par exemple une céramique transparente ayant une conductivité thermique supérieure à 10 W/mK (par exemple à base de Y₂O₃, Sc₂O₃, Lu₂O₃, Y₃Al₅O₁₂, MgAl₂O₄, ou AION), voire une conductivité thermique supérieure à 40 W/mK (par exemple une céramique transparente à base de MgO, comme déjà indiqué, ou à base de nitrure d'aluminium : AIN dont la conductivité thermique vaut 320 W/mK).

Dans la description qui précède, l'élément transparent est situé au niveau (ou à proximité) de la face d'entrée de la lumière L dans l'écran 5. On pourrait toutefois prévoir, en variante ou en surplus, un élément transparent du même type au niveau (ou à proximité) de la face de sortie de la lumière, c'est-à-dire de la face tournée vers le miroir de renvoi 4. On peut ainsi évacuer de la chaleur générée au niveau de cette face de sortie. Dans le cas d'utilisation d'un élément transparent en oxyde de magnésium, on profite alors en outre de la faible réflexion en surface de l'élément transparent (réflexion en surface 7% plus faible qu'avec un élément en oxyde d'aluminium par exemple), ce qui limite les reflets présents sur la face externe du dispositif de génération d'image.

Dans ce contexte notamment (mais également dans les exemples présentés ci-dessus), l'élément transparent peut en outre avoir un traitement anti-reflet pour améliorer sa transmittance.

## Revendications

1. Dispositif de génération d'image (3) comprenant une source de lumière (6) produisant un faisceau lumineux et un écran (5) traversé par le faisceau lumineux et conçu pour modifier le faisceau lumineux de manière à former une image, dans lequel l'écran (5) comprend un élément transparent (50 ; 150 ; 250 ; 350 ; 450 ; 550 ; 650) traversé par le faisceau lumineux et agencé pour évacuer la chaleur générée au niveau de l'écran (5), et les éléments en forme de plaque suivant : un polariseur d'entrée (20, 120, 220, 420, 520), une première vitre (12, 112, 212, 312, 412), une matrice de cristaux liquides (10, 110, 210, 310, 410, 510, 610), une seconde vitre (14, 114, 214, 314, 414, 514, 614), une matrice d'éléments colorés (16, 116, 216, 316, 416, 516, 616), un polariseur de sortie (22, 122, 222, 322, 422, 522, 622), l'élément transparent pouvant porter le polariseur d'entrée et/ou former la première vitre; et dans lequel ledit élément transparent (50 ; 150 ; 250 ; 350 ; 450 ; 550 ; 650) est réalisé en céramique transparente frittée ladite céramique étant un oxyde de magnésium,
et dans lequel l'écran (5) comprend un capot formé d'une part, d'un premier capot (30 ; 130 ; 230 ; 330 ; 430 ; 530 ; 630) et d'autre part, d'un second capot métallique (40 ; 140 ; 240 ; 340 ; 440 ; 540 ; 640),
le premier capot comprenant une partie transversale (31, 131, 231, 331, 431, 531, 631) qui s'étend en contact d'une face de sortie du polariseur de sortie (22, 122, 222, 322, 422, 522, 622), une fenêtre (32, 132, 232, 332, 432, 532, 632) étant formée dans ladite partie transversale pour permettre la sortie du faisceau lumineux généré par l'écran,
le premier capot étant reçu dans le second capot,
le second capot s'étendant autour du premier capot sur la plus grande partie de longueur du premier capot
le second capot comprenant une partie transversale (41, 141, 241, 341, 441, 541, 641) qui s'étend au droit et au contact d'une l'extrémité circonférentielle du premier capot et/ou du polariseur d'entrée,
une fenêtre (42, 142, 242, 342, 442, 542, 642) étant formée dans la partie transversale au second capot pour permettre l'entrée de la lumière générée par la source de lumière (6),
les parties transversales des premier et second capots retenant axialement les éléments en forme de plaque constitutifs de l'écran (5),
et dans lequel l'élément transparent (50 ; 150 ; 250 ; 350 ; 450 ; 550 ; 650) est en contact thermique avec le second capot métallique (40 ; 140 ; 240 ; 340 ; 440 ; 540 ; 640).

2. Dispositif de génération d'image selon la revendication 1, dans lequel ladite céramique a une conductivité thermique supérieure à 40 W/mK.

3. Dispositif de génération d'image selon l'une des revendications précédentes, dans lequel l'élément transparent (50 ; 150) est en contact avec au moins une face externe du capot métallique (40 ; 140).

4. Dispositif de génération d'image selon l'une des revendication 1 à 2, dans lequel l'élément transparent (250 ; 350 ; 450 ; 550 ; 650) est reçu à l'intérieur du capot métallique (240 ; 340 ; 440 ; 540 ; 640).

5. Dispositif de génération d'image selon l'une des revendications précédentes, dans lequel l'élément transparent (50 ; 150 ; 250 ; 350 ; 650) est au contact de la partie transversale (41 ; 141 ; 241 ; 341 ; 641) du second capot métallique (40 ; 140 ; 240 ; 340 ; 640) entourant la fenêtre (42 ; 142 ; 242 ; 342 ; 642) formée dans le capot métallique (40 ; 140 ; 240 ; 340 ; 640).

6. Afficheur tête haute (1) comprenant un dispositif de génération d'image (3) selon l'une des revendications 1 à 5 et un dispositif de projection d'images (4) adapté à transmettre en direction d'une lame semi-transparente (2) les images générées par le dispositif de génération d'image (3).

## Patentansprüche

1. Bilderzeugungsvorrichtung (3) umfassend eine Lichtquelle (6), die ein Lichtbündel erzeugt, und einen Schirm (5), der von dem Lichtbündel durchquert wird und dafür ausgelegt ist, das Lichtbündel zu verändern, um ein Bild zu bilden, wobei der Schirm (5) ein transparentes Element (50; 150; 250; 350; 450; 550; 650), das vom Lichtbündel durchquert wird und dafür angeordnet ist, die Wärme abzuführen, die am Schirm (5) erzeugt wird, und die plattenförmigen Elemente wie folgt umfasst: einen Eintrittspolarisator (20, 120, 220, 420, 520), eine erste Scheibe (12, 112, 212, 312, 412), eine Flüssigkristallmatrix (10, 110, 210, 310, 410, 510, 610), eine zweite Scheibe (14, 114, 214, 314, 414, 514, 614), eine Matrix aus farbigen Elementen (16, 116, 216, 316, 416, 516, 616), einen Austrittspolarisator (22, 122, 222, 322, 422, 522, 622), wobei das transparente Element den Eintrittspolarisator tragen und/oder die erste Scheibe bilden kann; und wobei das transparente Element (50; 150; 250; 350; 450; 550; 650) aus gesinterter transparenter Keramik gebildet ist, wobei die Keramik ein Magnesiumoxid ist,
und wobei der Schirm (5) eine Abdeckung umfasst, die einerseits von einer ersten Abdeckung (30; 130; 230; 330; 430; 530; 630) und andererseits von einer zweiten, metallischen Abdeckung (40; 140; 240; 340; 440; 540; 640) gebildet ist,
wobei die erste Abdeckung einen Querabschnitt (31, 131, 231, 331, 431, 531, 631) umfasst, der sich in Kontakt mit einer Austrittsfläche des Austrittspolarisators (22, 122, 222, 322, 422, 522, 622) erstreckt, wobei ein Fenster (32, 132, 232, 332, 432, 532, 632) im Querabschnitt ausgebildet ist, um den Austritt des Lichtbündels zu gestatten, das vom Schirm erzeugt wird,
wobei die erste Abdeckung in der zweiten Abdeckung aufgenommen ist,
wobei sich die zweite Abdeckung über den größeren Längenabschnitt der ersten Abdeckung um die erste Abdeckung erstreckt
wobei die zweite Abdeckung einen Querabschnitt (41, 141, 241, 341, 441, 541, 641) umfasst, der sich an und in Kontakt mit einem Umfangsende der ersten Abdeckung und/oder dem Eintrittspolarisator erstreckt, wobei ein Fenster (42, 142, 242, 342, 442, 542, 642) im Querabschnitt der zweiten Abdeckung ausgebildet ist, um den Eintritt des Lichts zu gestatten, das von der Lichtquelle (6) erzeugt wird,
wobei die Querabschnitte der ersten und zweiten Abdeckung die plattenförmigen Elemente, die den Schirm (5) bilden, axial festhalten,
und wobei das transparente Element (50; 150; 250; 350; 450; 550; 650) mit der zweiten metallischen Abdeckung (40; 140; 240; 340; 440; 540; 640) in thermischem Kontakt steht.

2. Bilderzeugungsvorrichtung nach Anspruch 1, wobei die Keramik eine Wärmeleitfähigkeit größer als 40 W/mK aufweist.

3. Bilderzeugungsvorrichtung nach einem der vorhergehenden Ansprüche, wobei das transparente Element (50; 150) mit wenigstens einer Außenseite der metallischen Abdeckung (40; 140) in Kontakt steht.

4. Bilderzeugungsvorrichtung nach einem der Ansprüche 1 bis 2, wobei das transparente Element (250; 350; 450; 550; 650) innerhalb der metallischen Abdeckung (240; 340; 440; 540; 640) aufgenommen ist.

5. Bilderzeugungsvorrichtung nach einem der vorhergehenden Ansprüche, wobei das transparente Element (50; 150; 250; 350; 650) mit dem Querabschnitt (41; 141; 241; 341; 641) der zweiten metallischen Abdeckung (40; 140; 240; 340; 640) in Kontakt steht, die das Fenster (42; 142; 242; 342; 642) umgibt, das in der metallischen Abdeckung (40; 140; 240; 340; 640) ausgebildet ist.

6. Head-up-Display (1) umfassend eine Bilderzeugungsvorrichtung (3) nach einem der Ansprüche 1 bis 5 und eine Bildprojektionsvorrichtung (4), die geeignet ist, die Bilder, die von der Bilderzeugungsvorrichtung (3) erzeugt werden, in Richtung eines halbtransparenten Blattes (2) zu übertragen.

## Claims

1. Image-generating device (3) comprising a light source (6) that produces a light beam and a screen (5) that is passed through by the light beam and that is designed to modify the light beam so as to form an image, in which device the screen (5) comprises a transparent element (50; 150; 250; 350; 450; 550; 650) that is passed through by the light beam and that is arranged to remove the heat generated in the screen (5), and the following plate-shaped elements: an entrance polarizer (20, 120, 220, 420, 520), a first glass sheet (12, 112, 212, 312, 412), a liquid-crystal matrix array (10; 110; 210; 310; 410; 510; 610), a second glass sheet (14, 114, 214, 314, 414, 514, 614), a matrix array of colour elements (16, 116, 216, 316, 416, 516, 616), an exit polarizer (22, 122, 222, 322, 422, 522, 622), the transparent element possibly bearing the entrance polarizer and/or forming the first glass sheet; and in which device said transparent element (50; 150; 250; 350; 450; 550; 650) is made of sintered transparent ceramic said ceramic being a magnesium oxide; and in which device the screen (5) comprises a cover formed on the one hand from a first cover (30; 130; 230; 330; 430; 530; 630) and on the other hand from a metal second cover (40; 140; 240; 340; 440; 540; 640), the first cover comprising a transverse portion (31, 131, 231, 331, 431, 531, 631) that extends so as to make contact with an exit face of the exit polarizer (22, 122, 222, 322, 422, 522, 622), a window (32, 132, 232, 332, 432, 532, 632) being formed in said transverse portion in order to allow the light beam generated by the screen to exit, the first cover being accommodated in the second cover, the second cover extending around the first cover over most of the length of the first cover, the second cover comprising a transverse portion (41, 141, 241, 341, 441, 541, 641) that extends in line and makes contact with a circumferential end of the first cover and/or of the entrance polarizer, a window (42, 142, 242, 342, 442, 542, 642) being formed in the transverse portion of the second cover in order to allow the light generated by the light source (6) to enter, the transverse portions of the first and second covers axially retaining the constituent plate-shaped elements of the screen (5); and in which device the transparent element (50; 150; 250; 350; 450; 550; 650) makes thermal contact with the metal second cover (40; 140; 240; 340; 440; 540; 640).

2. Image-generating device according to Claim 1, wherein said ceramic has a thermal conductivity higher than 40 W/mK.

3. Image-generating device according to one of the preceding claims, wherein the transparent element (50; 150) makes contact with at least one external face of the metal cover (40; 140) .

4. Image-generating device according to one of Claims 1 and 2, wherein the transparent element (250; 350; 450; 550; 650) is accommodated in the interior of the metal cover (240; 340; 440; 540; 640).

5. Image-generating device according to one of the preceding claims, wherein the transparent element (50; 150; 250; 350; 650) makes contact with the transverse portion (41; 141; 241; 341; 641) of the metal second cover (40; 140; 240; 340; 640) encircling the window (42; 142; 242; 342; 642) formed in the metal cover (40; 140; 240; 340; 640).

6. Head-up display (1) comprising an image-generating device (3) according to one of Claims 1 to 5 and an image-projecting device (4) suitable for transmitting in the direction of a semi-transparent plate (2) the images generated by the image-generating device (3).
